# EUROPEAN PATENT APPLICATION

(11) **EP 4 645 915 A1**
(43) Date of publication of application: **05.11.2025**
(21) Application number: 24741145.7
(22) Date of filing: 04.01.2024
(51) Int. Cl.: H04W 4/06

(54) **NETWORKING DEVICE COMMUNICATION METHOD AND ELECTRONIC DEVICE**

(30) Priority: 13.01.2023 CN 202310094096
(71) Applicant: Huawei Technologies Co., Ltd., Shenzhen, Guangdong 518129 (CN)
(72) Inventor: JIANG, Zhongyin, Shenzhen, Guangdong 518129 (CN); ZHOU, Yan, Shenzhen, Guangdong 518129 (CN); ZHENG, Bowen, Shenzhen, Guangdong 518129 (CN); HU, Jianrong, Shenzhen, Guangdong 518129 (CN); WANG, Jian, Shenzhen, Guangdong 518129 (CN); CHENG, Xingqing, Shenzhen, Guangdong 518129 (CN); GAO, Lei, Shenzhen, Guangdong 518129 (CN)
(74) Representative: Goddar, Heinz J.
(86) International application number: PCT/CN2024/070579
(87) International publication number: WO 2024/149146

(57) **Abstract**

This application provides a networking device communication method and an electronic device, which may be used in a networking communication scenario. The method includes: A primary device in a network determines a correspondence between a device identity ID of a secondary device and a timing, and indicates the secondary device to: send a broadcast message in a communication window of the primary device based on a corresponding timing, and receive a broadcast message in the communication window of the primary device at a non-corresponding timing. According to the technical solution of this application, the primary device in the network sets a timing at which the secondary device sends a broadcast in the communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

## Description

This application claims priority to Chinese Patent Application No. 202310094096.1, filed with the China National Intellectual Property Administration on January 13, 2023 and entitled "NETWORKING DEVICE COMMUNICATION METHOD AND ELECTRONIC DEVICE", which is incorporated herein by reference in its entirety.

### TECHNICAL FIELD

This application relates to the field of electronic devices, and more specifically, to a networking device communication method and an electronic device.

### BACKGROUND

With popularization of electronic devices, each user usually has a plurality of electronic devices at the same time, including a mobile phone, a tablet computer, a smart screen, a personal computer (personal computer, PC), a smart speaker, a smart cockpit, and the like. With updates of these devices, various device applications emerge. Some device applications need to keep real-time awareness and communication with a surrounding device to ensure service performance. However, in current short-range wireless communication technologies such as Bluetooth (Bluetooth) and wireless fidelity (wireless fidelity, Wi-Fi), networking topologies of these technologies are mainly star, tree, or mesh topologies. Especially, in a mobile scenario, a networking topology frequently changes, leading to high maintenance costs. This is not conducive to large-scale development or application.

Therefore, in a further method, when a quantity of networking devices is large and continuously changes with a mobile scenario, frequent topology changes can be avoided, and resource overheads can be reduced.

### SUMMARY

This application provides a networking device communication method and an electronic device, to avoid frequent topology changes and reduce resource overheads when a quantity of networking devices is large and continuously changes with a mobile scenario.

According to a first aspect, a networking device communication method is provided, and includes: A first device determines a correspondence between a device identity (identity, ID) of a second device and a first timing, where the first device and the second device belong to a same network, the first device is a primary device in the network, and the second device is a secondary device in the network. The first device sends the correspondence between the device ID of the second device and the first timing to the second device, where the correspondence between the device ID of the second device and the first timing indicates the second device to receive a broadcast message at a non-first timing in a communication window of the first device. The device identity may be an ID, a media access control (media access control, MAC) address, or an internet protocol (internet protocol, IP) address of the device, or another identity that can represent the device. The communication window of the first device may include a plurality of timings, and duration included in one timing may be several milliseconds or several slots. This is not limited in this application. For example, the communication window of the first device may include a timing 1, a timing 2, and a timing 3, and duration of the three timings is less than or equal to duration of the communication window of the first device. The first timing may be any one of the timing 1, the timing 2, and the timing 3. For example, when the first timing is the timing 2, the non-first timing is the timing 1 and the timing 3, and that the second device receives the broadcast message at the non-first timing in the communication window of the first device is that the second device receives the broadcast message at the timing 1 and the timing 3 in the communication window of the first device.

According to the technical solution of this application, a primary device in a network sets a timing corresponding to a secondary device in a communication window, to enable the secondary device to receive a broadcast message at another timing. This can avoid frequent topology changes and reduce resource overheads when a quantity of networking devices is large and continuously changes with a mobile scenario.

With reference to the first aspect, in some implementations of the first aspect, the correspondence between the device ID of the second device and the first timing further indicates the second device to send a broadcast message at the first timing in the communication window of the first device.

According to the technical solution of this application, a primary device in a network sets a timing corresponding to a secondary device in a communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

With reference to the first aspect, in some implementations of the first aspect, that the first device determines the correspondence between the device ID of the second device and the first timing includes: The first device receives first information from the second device, where the first information indicates that the second device sends data at an idle timing in the communication window; and determines the correspondence between the device ID of the second device and the first timing, where the first timing is the idle timing.

With reference to the first aspect, in some implementations of the first aspect, before sending the correspondence, the method further includes: The first device receives second information from the second device, where the second information indicates that the second device requests to access the network; and sends third information to the second device, where the third information indicates that the second device has gained access to the network.

With reference to the first aspect, in some implementations of the first aspect, before receiving the second information from the second device, the method further includes: The first device sends fourth information to the second device, where the fourth information includes identification information of the network and a weight of the first device in the network, and the identification information of the network and the weight of the first device in the network are used for the second device to determine whether to request to access the network. The identification information of the network includes at least one of the following: a universally unique identifier (universally unique identifier, UUID), an identity ID, a user name, a user number, a user serial number, a locally stored identifier, and a preconfigured identifier. For example, the identification information of the network may be several digits entered for face-to-face group creation, a pre-shared identifier, or an identifier specified in a protocol.

With reference to the first aspect, in some implementations of the first aspect, before sending the correspondence to the second device, the method further includes: The first device sends information about the communication window of the first device to the second device, where the information about the communication window indicates a start moment of the communication window and duration of the communication window.

According to a second aspect, a networking device communication method is provided, and includes: A second device receives a correspondence between a device identity ID of the second device and a first timing from a first device, where the first device and the second device belong to a same network, the first device is a primary device in the network, and the second device is a secondary device in the network. The second device receives a broadcast message at a non-first timing in a communication window of the first device based on the correspondence between the device ID of the second device and the first timing.

According to the technical solution of this application, a primary device in a network sets a timing corresponding to a secondary device in a communication window, to enable the secondary device to receive a broadcast message at another timing. This can avoid frequent topology changes and reduce resource overheads when a quantity of networking devices is large and continuously changes with a mobile scenario.

With reference to the second aspect, in some implementations of the second aspect, the method further includes: The second device sends a broadcast message at the first timing in the communication window of the first device based on the correspondence between the device ID of the second device and the first timing.

According to the technical solution of this application, a primary device in a network sets a timing corresponding to a secondary device in a communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

With reference to the second aspect, in some implementations of the second aspect, before receiving the correspondence from the first device, the method further includes: The second device sends data at an idle timing in the communication window of the first device, where the idle timing is used for the first device to determine the first timing.

With reference to the second aspect, in some implementations of the second aspect, before receiving the correspondence, the method further includes: The second device sends second information to the first device, where the second information is used to request to access the network. The second device receives third information from the first device, where the third information indicates that the second device has gained access to the network.

With reference to the second aspect, in some implementations of the second aspect, before sending the second information to the first device, the method further includes: The second device receives fourth information from the first device, where the fourth information includes identification information of the network and a weight of the first device in the network. The second device determines, based on the identification information of the network and the weight of the first device in the network, to request to access the network. The identification information of the network includes at least one of the following: a universally unique identifier UUID, an identity ID, a user name, a user number, a user serial number, a locally stored identifier, and a preconfigured identifier. When a network identity owned by the second device matches a network identity of the first device, the second device and the first device may form a same network. That network identities match includes but is not limited to that the foregoing listed network identification information is the same, and may alternatively be that devices have a same mapping relationship. For example, that at least two devices are devices with a same account, devices in a same conference room, or devices to which a same digit is transmitted and input in a specific manner may be understood as that network identities of the at least two devices match. For another example, the identification information of the network may be several digits entered for face-to-face group creation, a pre-shared identifier, or an identifier specified in a protocol. That digits or identifiers of at least two devices are the same may be understood as that network identities of the at least two devices match.

With reference to the second aspect, in some implementations of the second aspect, that the second device determines, based on the identification information of the network and the weight of the first device in the network, to request to access the network includes: The second device determines that the identification information of the network matches identification information of a network of the second device and the weight of the first device in the network is greater than a weight of the second device in the network. The second device determines to request to access the network.

With reference to the second aspect, in some implementations of the second aspect, before sending the second information, the method further includes: The second device receives information about the communication window of the first device from the first device, where the information about the communication window indicates a start moment of the communication window and duration of the communication window. The second device synchronizes with the first device based on the information about the communication window.

According to a third aspect, an electronic device is provided, and includes: a processing module, configured to determine a correspondence between a device identity ID of a second device and a first timing, where the first device and the second device belong to a same network, the first device is a primary device in the network, and the second device is a secondary device in the network; and a transceiver module, configured to send the correspondence between the device ID of the second device and the first timing to the second device, where the correspondence between the device ID of the second device and the first timing indicates the second device to receive a broadcast message at a non-first timing in a communication window of the first device.

With reference to the third aspect, in some implementations of the third aspect, the correspondence between the device ID of the second device and the first timing further indicates the second device to send a broadcast message at the first timing in the communication window of the first device.

With reference to the third aspect, in some implementations of the third aspect, the transceiver module is specifically configured to receive first information, where the first information indicates that the second device sends data at an idle timing in the communication window of the first device; and the processing module is specifically configured to determine the correspondence between the device ID of the second device and the first timing, where the first timing is the idle timing.

With reference to the third aspect, in some implementations of the third aspect, the transceiver module is further configured to receive second information, where the second information indicates that the second device requests to access the network; and the transceiver module is further configured to send third information, where the third information indicates that the second device has gained access to the network.

With reference to the third aspect, in some implementations of the third aspect, the transceiver module is further configured to send fourth information, where the fourth information includes identification information of the network and a weight of the first device in the network, and the identification information of the network and the weight of the first device in the network are used for the second device to determine whether to request to access the network. The identification information of the network includes at least one of the following: a universally unique identifier UUID, an identity ID, a user name, a user number, a user serial number, a locally stored identifier, and a preconfigured identifier.

With reference to the third aspect, in some implementations of the third aspect, the transceiver module is further configured to send information about the communication window of the first device, where the information about the communication window indicates a start moment of the communication window and duration of the communication window.

According to a fourth aspect, an electronic device is provided, and includes: a transceiver module, configured to receive a correspondence between a device identity ID of the second device and a first timing from a first device, where the first device and the second device belong to a same network, the first device is a primary device in the network, and the second device is a secondary device in the network. The transceiver module is further configured to receive a broadcast message at a non-first timing in a communication window of the first device based on the correspondence between the device ID of the second device and the first timing.

With reference to the fourth aspect, in some implementations of the fourth aspect, the transceiver module is further configured to send a broadcast message at the first timing in the communication window of the first device based on the correspondence between the device ID of the second device and the first timing.

With reference to the fourth aspect, in some implementations of the fourth aspect, the transceiver module is further configured to send data at an idle timing in the communication window of the first device, where the idle timing is used for the first device to determine the first timing.

With reference to the fourth aspect, in some implementations of the fourth aspect, the transceiver module is further configured to send second information, where the second information is used to request to access the network; and the transceiver module is further configured to receive third information, where the third information indicates that the second device has gained access to the network.

With reference to the fourth aspect, in some implementations of the fourth aspect, the transceiver module is further configured to receive fourth information, where the fourth information includes identification information of the network and a weight of the first device in the network; and the processing module is further configured to determine, based on the identification information of the network and the weight of the first device in the network, to request to access the network. The identification information of the network includes at least one of the following: a universally unique identifier UUID, an identity ID, a user name, a user number, a user serial number, a locally stored identifier, and a preconfigured identifier.

With reference to the fourth aspect, in some implementations of the fourth aspect, the processing module is specifically configured to: determine that the identification information of the network matches identification information of a network of the second device and the weight of the first device in the network is greater than a weight of the second device in the network; and determine to request to access the network.

With reference to the fourth aspect, in some implementations of the fourth aspect, the transceiver module is further configured to receive, for the second device, information about the communication window of the first device, where the information about the communication window indicates a start moment of the communication window and duration of the communication window; and the processing module is configured to synchronize with the first device based on the information about the communication window.

According to a fifth aspect, a chip is provided. The chip includes a processor and a data interface. The processor reads, through the data interface, instructions stored in a memory, to perform the method according to any one of the implementations of the first aspect and the second aspect.

Optionally, in an implementation, the chip may further include a memory. The memory stores instructions. The processor is configured to execute the instructions stored in the memory. When the instructions are executed, the processor is configured to perform the method according to any one of the implementations of the first aspect and the second aspect.

According to a sixth aspect, a computer program storage medium is provided. The computer-readable medium stores program code. When the computer program code is run on a computer, the computer is enabled to execute instructions for any one of the possible implementations of the first aspect and the second aspect.

According to a seventh aspect, a computer program product including instructions is provided. When the computer program product is run on a computer, the computer is enabled to perform the method according to any one of the implementations of the first aspect and the second aspect.

According to an eighth aspect, an electronic device is provided, and includes a module for performing any one of the possible implementations of the first aspect and the second aspect.

According to a ninth aspect, a communication apparatus is provided, and is configured to perform the method according to any one of the possible implementations of the first aspect and the second aspect.

According to a tenth aspect, a communication apparatus is provided. The apparatus includes a processor and a memory. The processor is coupled to the memory. The memory is configured to store a computer program. The processor is configured to execute the computer program stored in the memory, to enable the communication apparatus to perform the method according to any one of the possible implementations of the first aspect and the second aspect.

According to an eleventh aspect, a communication apparatus is provided. The apparatus includes a processor, a memory, and a transceiver. The memory is configured to store a computer program. The processor is configured to execute the computer program stored in the memory, to enable the apparatus to perform the method according to any one of the possible implementations of the first aspect and the second aspect.

According to a twelfth aspect, a communication apparatus is provided. The communication apparatus includes at least one processor and a communication interface. The communication interface is used for the communication apparatus to exchange information with another communication apparatus. When program instructions are executed in the at least one processor, the communication apparatus is enabled to implement the method according to any one of the possible implementations of the first aspect and the second aspect.

According to a thirteenth aspect, a processor is provided. The processor includes at least one circuit, configured to perform the method according to any one of the possible implementations of the first aspect and the second aspect.

According to a fourteenth aspect, a chip system is provided. The chip system includes at least one processor. When program instructions are executed in the at least one processor, the chip system is enabled to implement the method according to any one of the possible implementations of the first aspect and the second aspect.

According to a fifteenth aspect, a communication system is provided. The communication system includes a first device and a second device. The first device and the second device belong to a same network. The first device is a primary device in the network. The second device is a secondary device in the network. The first device is configured to send a correspondence between a device ID of the second device and a first timing. The second device is configured to receive a broadcast message at a non-first timing in a communication window of the first device based on the correspondence between the device ID of the second device and the first timing.

With reference to the fifteenth aspect, in some implementations of the fifteenth aspect, the second device is further configured to send a broadcast message at the first timing in the communication window of the first device based on the correspondence between the device ID of the second device and the first timing.

With reference to the fifteenth aspect, in some implementations of the fifteenth aspect, the second device is further configured to send data at an idle timing in the communication window of the first device; and the first device is specifically configured to determine the first timing based on the idle timing.

With reference to the fifteenth aspect, in some implementations of the fifteenth aspect, the second device is further configured to send second information, where the second information is used to request to access the network; and the first device is further configured to send third information, where the third information indicates that the second device has gained access to the network.

With reference to the fifteenth aspect, in some implementations of the fifteenth aspect, the first device is further configured to send fourth information, where the fourth information includes identification information of the network and a weight of the first device in the network. The identification information of the network includes at least one of the following: a universally unique identifier UUID, an identity ID, a user name, a user number, a user serial number, a locally stored identifier, and a preconfigured identifier. When a network identity owned by the second device matches a network identity of the first device, the second device and the first device may form a same network.

With reference to the fifteenth aspect, in some implementations of the fifteenth aspect, the first device is further configured to send information about the communication window of the first device, where the information about the communication window indicates a start moment of the communication window and duration of the communication window. The second device is further configured to synchronize with the communication window of the first device based on the information about the communication window of the first device.

### BRIEF DESCRIPTION OF DRAWINGS

FIG. 1 is a diagram of current interaction between networking devices;
FIG. 2 is a diagram of a current Wi-Fi basic service set (basic service set, BSS) topology;
FIG. 3 is a diagram of a current topology of a piconet and a scatternet;
FIG. 4 shows a system architecture to which a networking device communication method is applicable according to an embodiment of this application;
FIG. 5 is a diagram of a hardware structure of an electronic device according to an embodiment of this application;
FIG. 6 shows a specific application scenario according to this application;
FIG. 7 is a diagram of a new sparklink short-range protocol architecture according to an embodiment of this application;
FIG. 8 is a schematic flowchart of a networking device communication method according to an embodiment of this application;
FIG. 9 is a schematic flowchart of a specific example of a networking device communication method according to an embodiment of this application;
FIG. 10 is a schematic flowchart of a sparklink access method according to an embodiment of this application;
FIG. 11 is a schematic flowchart of a bus access method according to an embodiment of this application;
FIG. 12 shows a bitmap form of an association (Association) ID according to an embodiment of this application;
FIG. 13 is a schematic flowchart of another specific example of a networking device communication method according to an embodiment of this application; and
FIG. 14 is a schematic flowchart of still another specific example of a networking device communication method according to an embodiment of this application.

### DESCRIPTION OF EMBODIMENTS

The following describes technical solutions of this application with reference to the accompanying drawings.

Terms used in the following embodiments are merely intended to describe specific embodiments, but not to limit this application. The terms "an", "a", "the", "the foregoing", and "this" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. The term "and/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects.

Reference to "an embodiment", "some embodiments", or the like described in this specification means that one or more embodiments of this application includes/include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

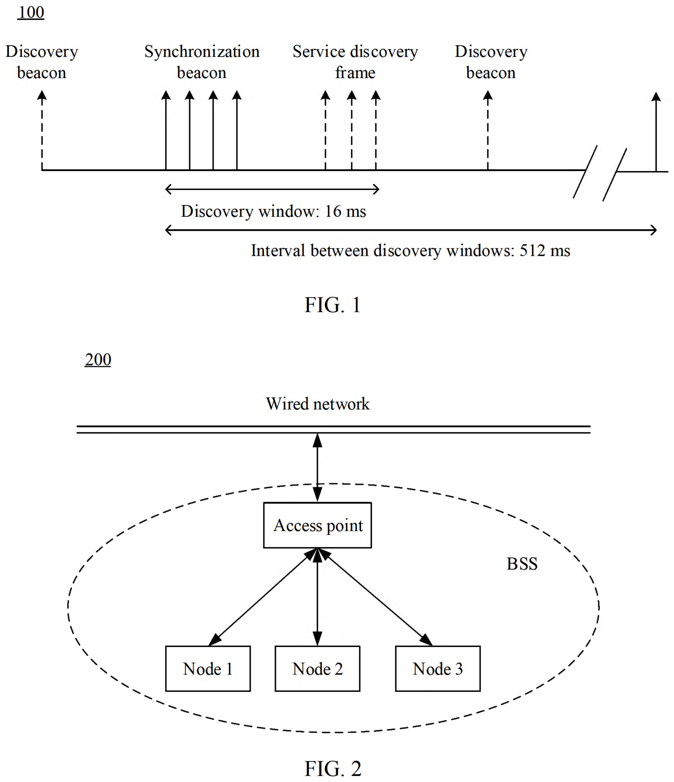

FIG. 1 is a diagram of current interaction between networking devices. As shown in FIG. 1, Wi-Fi Aware^{™} (awareness) is a neighbor awareness networking (neighbor awareness networking, NAN) protocol that can quickly discover and connect to other Wi-Fi devices without conventional network infrastructure, an internet connection, or a GPS signal, and exchange data with these devices, so that a Wi-Fi function is extended. Wi-Fi Aware^{™} establishes an independent and point-to-point Wi-Fi connection based on a current location and a preference of a user, to provide extensive experience at a present moment. In the interactive network, a device in the network sends a synchronization beacon (sync beacons) and a service discovery frame (service discovery frames) within a discovery window (discovery window, DW), and sends a discovery beacon (discovery beacons) beyond the DW.

In the foregoing interactive network, devices based on a same communication protocol form a network. Therefore, irrelevant devices with different accounts, in different scenarios, or the like form a network, and slot resources cannot be accurately divided for each node device. In addition, each node device needs to monitor a carrier. This is likely to cause a communication conflict and unnecessary power consumption.

FIG. 2 is a diagram of a current Wi-Fi basic service set (basic service set, BSS) topology. Wi-Fi is a network with a center. One network interface controller (network interface controller) can be added only to one BSS. As shown in FIG. 2, a BSS includes an access point (access point, AP) and another node (station) (for example, a node 1, a node 2, and a node 3), and has a star topology. The AP is a network manager responsible for node access. Communication between nodes needs to be performed through forwarding by the AP.

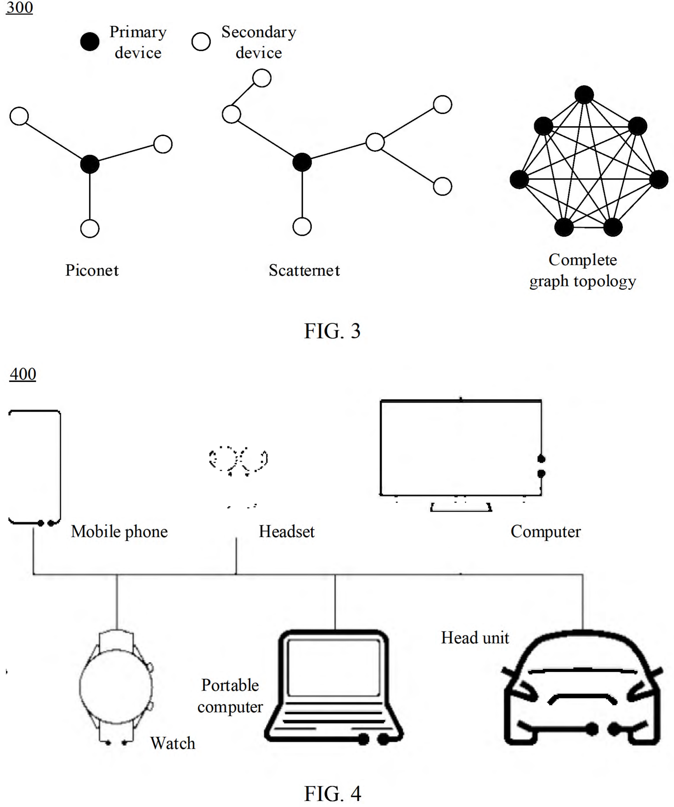

FIG. 3 is a diagram of a current topology of a piconet and a scatternet. Bluetooth (Bluetooth) is a point-to-point (Ad-hoc) network that includes a piconet (Piconet) and a scatternet (Scatternet). As shown in FIG. 3, the piconet includes a primary device and a secondary device, and the scatternet includes a plurality of piconets. A piconet needs to be established for communication between nodes. When there is a large quantity of devices, a large quantity of resources, such as connection resources, power resources, and air interface resources, are consumed for establishing a piconet. In a distributed scenario, each node needs to synchronize data with another node. In this case, a complete graph topology is needed. N(N-1)/2 connections are needed in a complete graph of N nodes.

The networks shown in FIG. 2 and FIG. 3 have the following disadvantages:
(1) A connection heartbeat needs to be maintained between any two nodes that directly communicate with each other. A relay node performs forwarding, leading to high power consumption of a device.
(2) Communication between a plurality of devices needs to be completed through a plurality of hops, leading to a long communication delay.
(3) When an AP access point serving as a relay point is disconnected, an entire network is disconnected, leading to poor mobility performance.
(4) A slot needs to be independently occupied for maintaining a heartbeat between any two points, leading to low channel utilization.

Based on the foregoing reasons, this application proposes a networking device communication method and an electronic device, to avoid frequent topology changes and reduce resource overheads when a quantity of networking devices is large and continuously changes with a mobile scenario.

FIG. 4 shows a system architecture to which a networking device communication method is applicable according to an embodiment of this application. As shown in FIG. 4, in this embodiment of this application, networking devices may include a mobile phone, a headset, a computer, a watch, a portable computer, a head unit, and the like. These devices are connected together through a wireless bus, to form a device network.

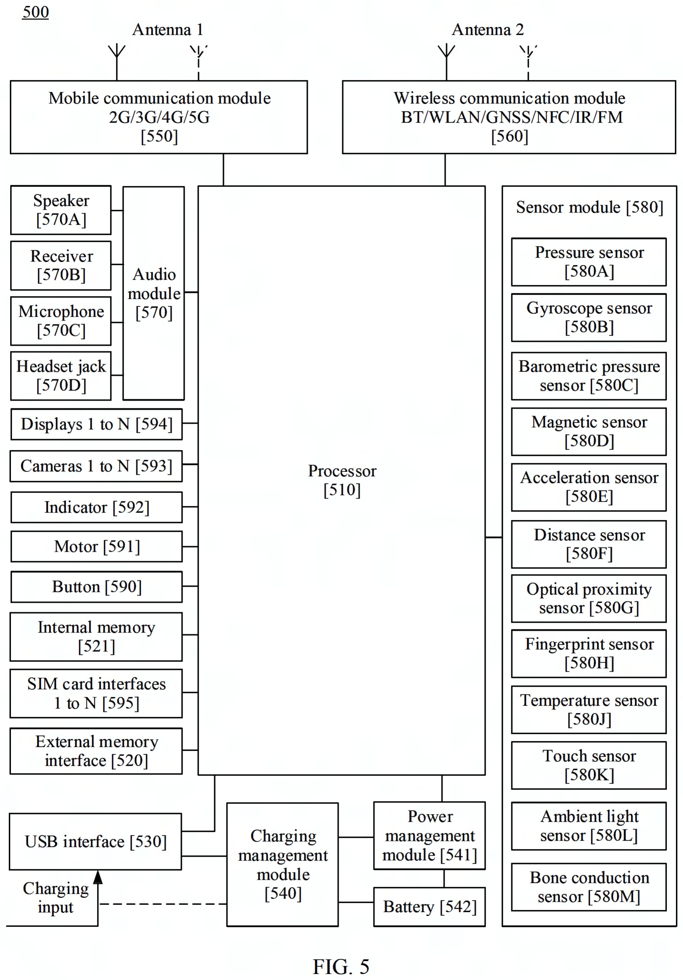

FIG. 5 is a diagram of a hardware structure of an electronic device according to an embodiment of this application. The electronic device 500 shown in FIG. 5 is merely an example, and the electronic device 500 may include more or fewer components than those shown in the figure, two or more components may be combined, or there may be different component configurations. Components shown in the figure may be implemented in hardware that includes one or more signal processing circuits and/or application-specific integrated circuits, software, or a combination of hardware and software.

The electronic device 500 may include a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, a subscriber identity module (subscriber identity module, SIM) card interface 595, and the like. The sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 500 may alternatively include one or more processors 510. The controller may generate an operation control signal based on an instruction operation code and a timing signal, to control instruction fetching and instruction execution. In some other embodiments, a memory may be further disposed in the processor 510, to store instructions and data. For example, the memory in the processor 510 may be a cache. The memory may store instructions or data that have/has been used or are/is cyclically used by the processor 510. If the processor 510 needs to use the instructions or the data again, the processor may directly invoke the instructions or the data from the memory. This avoids repeated access, reduces waiting time of the processor 510, and therefore improves data processing or instruction execution efficiency of the electronic device 500.

In some embodiments, the processor 510 may include one or more interfaces. The interface may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface is an interface that conforms to a USB standard specification, and may be specifically a mini USB interface, a micro USB interface, a USB Type-C interface, or the like. The USB interface may be used for connecting a charger to charge the electronic device 500, or may be configured to transmit data between the electronic device 500 and a peripheral device. The USB interface may alternatively be used for connecting a headset for playing audio through the headset.

It can be understood that an interface connection relationship between the modules shown in this embodiment of this application is merely an example for description, and does not constitute a limitation on the structure of the electronic device 500. In some other embodiments of this application, the electronic device 500 may alternatively use an interface connection mode different from that in the foregoing embodiment, or use a combination of a plurality of interface connection modes.

A wireless communication function of the electronic device 500 may be implemented by the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the electronic device 500 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 550 may provide a solution applied to the electronic device 500 for wireless communication such as 2G/3G/4G/5G. The mobile communication module 550 may include at least one filter, a switch, a power amplifier, a low noise amplifier (low noise amplifier, LNA), and the like. The mobile communication module 550 may receive an electromagnetic wave through the antenna 1, perform processing such as filtering or amplification on the received electromagnetic wave, and transmit a processed electromagnetic wave to the modem processor for demodulation. The mobile communication module 550 may further amplify a signal modulated by the modem processor, and convert an amplified signal into an electromagnetic wave for radiation through the antenna 1. In some embodiments, at least some functional modules of the mobile communication module 550 may be disposed in the processor 510. In some embodiments, at least some functional modules of the mobile communication module 550 may be disposed in a same component as at least some modules of the processor 510.

The wireless communication module 560 may provide a solution applied to the electronic device 500 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 560 may be one or more components integrating at least one communications processor module. The wireless communication module 560 receives an electromagnetic wave through the antenna 2, performs frequency modulation and filtering on an electromagnetic wave signal, and sends a processed signal to the processor 510. The wireless communication module 560 may further receive a to-be-sent signal from the processor 510, perform frequency modulation and amplification on the signal, and convert a processed signal into an electromagnetic wave for radiation through the antenna 2.

The electronic device 500 implements a display function through the GPU, the display 594, the application processor, and the like. The GPU is a microprocessor for image processing, and is connected to the display 594 and the application processor. The GPU is configured to perform mathematical and geometric computation for graphics rendering. The processor 510 may include one or more GPUs that execute program instructions to generate or change displayed information.

The display 594 is configured to display an image, a video, or the like. The display 594 includes a display panel. In some embodiments, the electronic device 500 may include one or N displays 594, where N is a positive integer greater than 1.

The electronic device 500 may implement an image shooting function through the ISP, the camera 593, the video codec, the GPU, the display 594, the application processor, and the like. The camera 593 is configured to capture a static image or a video. An optical image of an object is generated through a lens, and is projected onto a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 500 may include one or N cameras 593, where N is a positive integer greater than 1.

The speaker 570A, also referred to as a "loudspeaker", is configured to convert an electrical audio signal into a sound signal. The electronic device 500 may be used to listen to music or answer a call in a hands-free mode through the speaker 570A.

The microphone 570C, also referred to as a "mike" or a "mic", is configured to convert a sound signal into an electrical signal.

In some embodiments, the electronic device may be a portable electronic device that further includes other functions such as a personal digital assistant function and/or a music player function, for example, a mobile phone, a tablet computer, a wearable electronic device with a wireless communication function (for example, a smartwatch), a video player, a headset, a speaker, or a camera. An example embodiment of the portable electronic device includes but is not limited to a portable electronic device on which iOS^{®}, Android^{®}, Microsoft^{®}, or another operating system is installed. The portable electronic device may alternatively be another portable electronic device, for example, a laptop (Laptop) computer. It should be further understood that, in some other embodiments, the electronic device may alternatively not be a portable electronic device, but is a desktop computer, a television, a speaker, a camera, or the like.

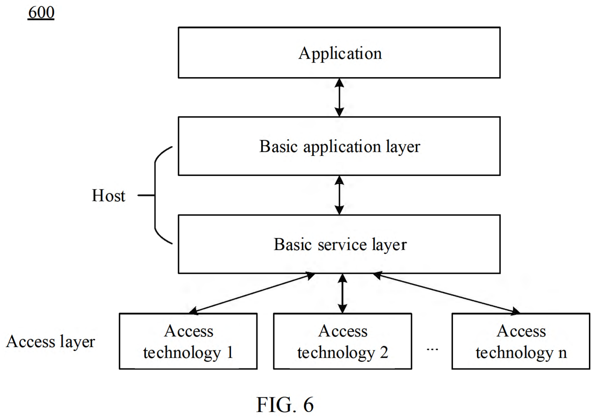

FIG. 6 shows a specific application scenario according to this application. Embodiments of this application may be specifically applied to a new sparklink short-range protocol architecture. As shown in FIG. 6, the new sparklink short-range protocol architecture may include an access layer, a host (Host), and an application (application, APP). The access layer may support a plurality of access technologies at the same time. A normalized host protocol is located above the access layer. The host may dynamically schedule, according to a corresponding requirement of the application, an access technology supported by the access layer.

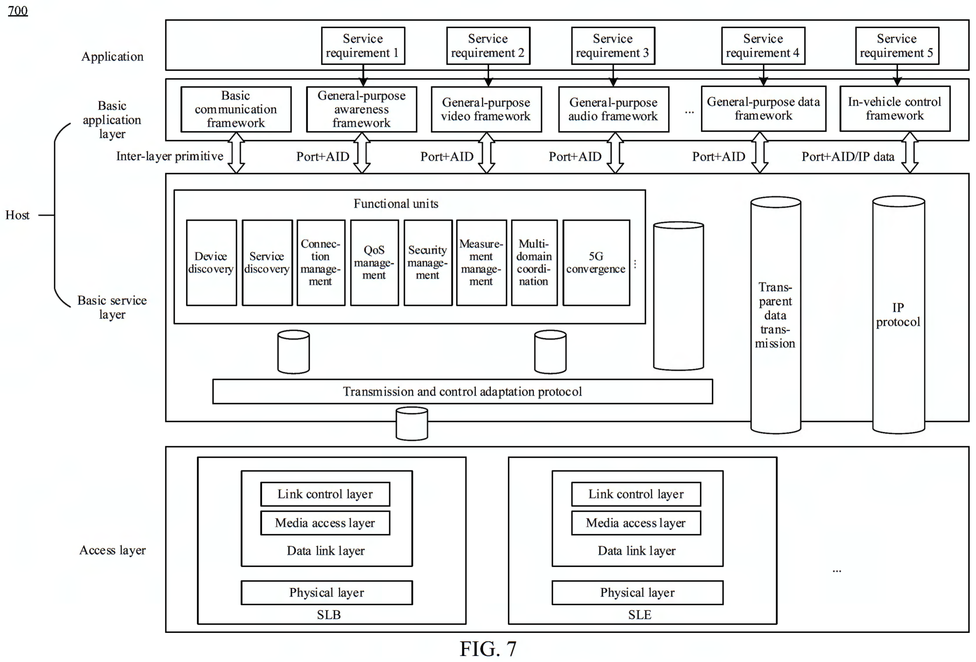

Specifically, as shown in FIG. 7, the host may include a basic application layer and a basic service layer. The basic application layer may be responsible for adapting to different service requirements (for example, a service requirement 1, a service requirement 2, ..., and a service requirement 5) of the upper-layer application, and routing data to the basic service layer based on one or more of an inter-layer primitive, a port (port), an application identification (application identification, AID), and an internet protocol (internet protocol, IP) address.

The port may be a channel at the basic application layer. The basic application layer may register a port for a service of the application, and send data of the service to the basic service layer through the port.

The application identification may be an identification of a mapping between a service function set and a quality of service (quality of service, QoS) flow at the application layer. Different service function sets may be distinguished by business identifications (business identification, BID). Based on different types of services, the basic application layer may include a plurality of different service function sets (or described as service modules or service frameworks), and different service function sets may include classified data processing for services.

For example, as shown in FIG. 7, the basic application layer may include a basic communication framework, a general-purpose awareness framework, a general-purpose video framework, a general-purpose audio framework, a general-purpose data framework, and an in-vehicle control framework. The general-purpose awareness framework may include processing of awareness data. The general-purpose video framework may include processing of a video, for example, encoding and decoding. The general-purpose audio framework may include processing of audio, for example, encoding and decoding. The general-purpose data framework may include processing of file data, for example, encryption and compression. The in-vehicle control framework may include processing of in-vehicle control data.

As shown in FIG. 7, the basic service layer may include a plurality of modules or functional units, including but not limited to a device discovery module, a service discovery module, a connection management module, a QoS management module, a security management module, a measurement management module, a multi-domain coordination module, a fifth-generation mobile communication technology (fifth-generation mobile communication technology, 5G) convergence module, and the like, to implement functions of creating, adding, deleting, or releasing a transmission channel (transmission channel, TC), controlling (for example, selecting an access technology) a logical channel (logical channel, LC), and the like, and adapt to service requirements (for example, traffic, a rate, sound quality, and a resolution) of the basic application layer. The basic service layer is compatible with a plurality of access layer technologies supported by the access layer, for example, an SLB access technology and an SLE access technology, and reserves a capability of being compatible with more access technologies in the future.

Specifically, the device discovery module may be configured to discover a device when no connection is established to a device. The service discovery module may be configured to discover and operate a service on a device. The connection management module may be configured to manage a transmission channel, including creating, adding, deleting, or releasing the transmission channel. The QoS management module may be configured to manage and negotiate upon QoS of transmission. The security management module is responsible for a secure connection at the basic service layer. The measurement management module may be configured to configure underlying measurement and scheduling for power control or the like. In a scenario in which a plurality of domains (subnets) exist, the multi-domain coordination module may implement information exchange between domains, and implement interference avoidance and load balancing between the plurality of domains. The 5G convergence module may be configured to establish a channel with a cellular 5G remote management capability, and implement a device with a cellular 5G remote control function through an authentication and verification mechanism.

The transmission channel may be a channel at the basic service layer, and the logical channel (or described as a logical link) may be a channel at the access layer. One logical channel corresponds to one access technology. When a communication device needs to send or broadcast data, a basic application layer of the communication device may send the data to a basic service layer through a port, the basic service layer may send the data to an access layer through a transmission channel, and the access layer may send or broadcast the data through a logical channel. When a communication device needs to receive or scan data, an access layer of the communication device may send the received or scanned data to a basic service layer through a logical channel, and the basic service layer may send the data to a basic application layer through a transmission channel and a port.

For example, as shown in FIG. 7, the basic application layer may send, to the basic service layer through a port, non-IP (non-IP) data that carries an AID; or may send, to the basic service layer through a port, IP data that carries an IP 5-tuple. The basic service layer may send, to the access layer through a transmission channel according to a transmission and control adaptation protocol, the data sent by the basic application layer; or may send, to the access layer through a transmission channel according to an IP protocol, the data sent by the basic application layer; or may send, to the access layer through a transmission channel in a transparent data transmission mode, the data sent by the basic application layer. It can be determined, through ultra path interconnect (ultra path interconnect, UPI), that data is to be transmitted according to the transmission and control adaptation protocol, or data is to be transmitted according to the IP protocol, or data is to be transmitted in the transparent data transmission mode.

In addition, transmission at the basic service layer may be classified into control plane transmission and service plane transmission. Correspondingly, a transmission channel at the basic service layer may include a control channel and a service channel. The control channel is used to transmit control plane data, and the service channel is used to transmit service plane data.

The service channel may include a unicast service channel, a multicast service channel, and a broadcast service channel. The unicast service channel is a service channel for transmitting a unicast service, and can implement point-to-point transmission. The multicast service channel is a service channel for transmitting a multicast service, and can implement point-to-group transmission. The multicast service channel has an underlying feedback (ack), and has specific underlying reliability. The broadcast service channel is a service channel for transmitting a broadcast service, and can implement connectionless transmission. The broadcast service channel has no underlying feedback (ack), and reliability needs to be ensured through a plurality of times of transmission.

It should be noted that one or more ports at the basic application layer may correspond to a same transmission channel at the basic service layer, and one or more transmission channels at the basic service layer may correspond to a same logical channel at the access layer. In addition, a logical channel provides a basis for establishing a transmission channel at the basic service layer, and the transmission channel at the basic service layer is available only after the logical channel is successfully established.

As shown in FIG. 7, the access layer may be responsible for processing an underlying logical channel, for example, establishing, reconfiguring, or deleting the logical channel, to meet a service requirement (for example, reliable data and real-time data) of the basic service layer. The logical channel may be used to transmit a service between two communication devices. The access layer may include a plurality of access technologies, including but not limited to an access technology of a sparklink basic (sparklink basic, SLB) short-range wireless communication system, an access technology of a sparklink low energy (sparklink low energy, SLE) short-range wireless communication system, and other access technologies, such as a Bluetooth low energy (Bluetooth low energy, BLE) technology and other sparklink alliance access technologies in the future.

For example, as shown in FIG. 7, the access layer may include a data link layer and a physical layer. The data link layer may be configured to implement functions of resource management, access control, data segmentation, concatenation, reordering, and the like, to ensure reliable data transmission. The physical layer may provide a physical connection for the data link layer through a transmission medium, to transparently transmit a bitstream. In some embodiments, the data link layer may further include a link control layer and a media access layer. The link control layer mainly performs link control protocol (link control protocol, LCP) interaction on a control link based on a link established between nodes, to implement functions of physical/logical link management, device behavior control, and the like. The media access layer is responsible for allocating radio resources, and providing a data transmission service for the link control layer.

Optionally, for a communication device that supports two access technologies (for example, supports both the SLB access technology and the SLE access technology), an access layer of the communication device may implement SLB access and SLE access respectively through different modules.

Based on the foregoing descriptions, the host protocol (or described as an upper-layer protocol) including the basic application layer and the basic service layer may adapt to the underlying access layer, to support requirements of different services. Specifically, the host protocol may be provided for a service function set to initiate a service request, and transmit and control service data.

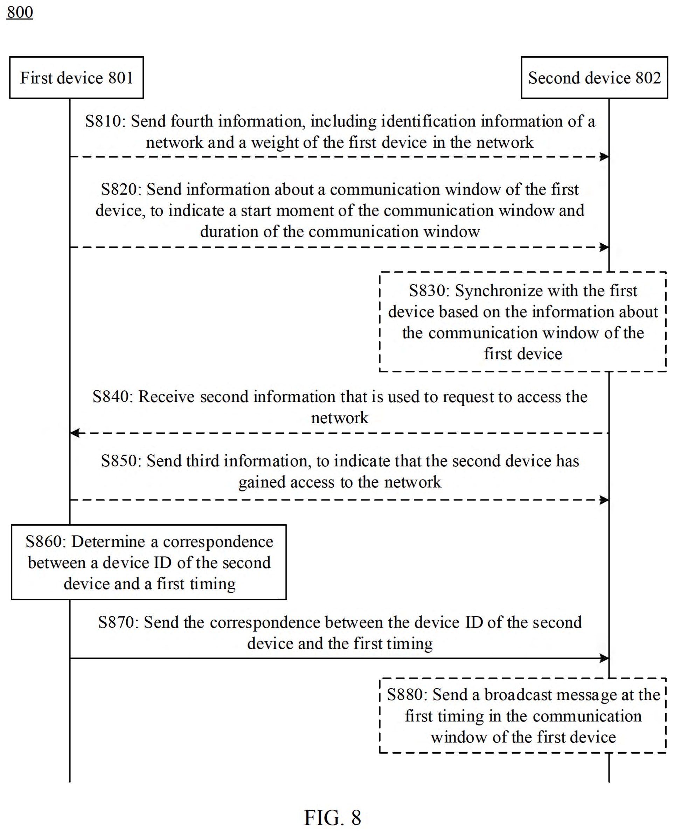

FIG. 8 is a schematic flowchart of a networking device communication method according to an embodiment of this application. A first device 801 and a second device 802 belong to a same network. The first device 801 is a primary device in the network. The second device 802 is a secondary device in the network.

Optionally, the method may include S810: The first device sends fourth information, where the fourth information includes identification information of the network and a weight of the first device in the network.

Correspondingly, the second device receives the fourth information. The second device may determine, based on the identification information of the network and the weight of the first device in the network, whether to access the network. For example, when the second device determines that the identification information of the network matches identification information of a network of the second device and the weight of the first device in the network is greater than a weight of the second device in the network, the second device determines to request to access the network.

The identification information of the network includes at least one of the following: a universally unique identifier UUID, an identity ID, a user name, a user number, a user serial number, a locally stored identifier, and a preconfigured identifier. When a network identity owned by the second device matches a network identity of the first device, the second device and the first device may form a same network. That network identities of devices match includes but is not limited to that the foregoing listed network identification information of the devices is the same, and may alternatively be that the devices have a same mapping relationship. For example, that at least two devices are devices with a same account, devices in a same conference room, or devices to which a same digit is transmitted and input in a specific manner may be understood as that network identities of the at least two devices match. For another example, the identification information of the network may be several digits entered for face-to-face group creation, a pre-shared identifier, or an identifier specified in a protocol. That digits or identifiers of at least two devices are the same may be understood as that network identities of the at least two devices match. That the first device sends the fourth information may be: sending the fourth information in a form of a broadcast message. That the second device receives the fourth information may be: receiving the fourth information by scanning a received broadcast message.

Optionally, the method may further include S820: The first device sends information about a communication window of the first device, where the information about the communication window of the first device indicates a start moment of the communication window and duration of the communication window.

Correspondingly, the second device receives the information about the communication window of the first device.

That the first device sends the information about the communication window of the first device may be: sending the information about the communication window in a form of a broadcast message. That the second device receives the information about the communication window of the first device may be: receiving the information about the communication window by scanning a received broadcast message.

Optionally, the method may further include S830: The second device synchronizes with the first device based on the information about the communication window of the first device.

The first device may send a plurality of different communication window offsets by sending a broadcast message. To be specific, content carried in each broadcast may indicate one communication window, and a subsequent communication window occasion and channel may be deduced based on the communication window. The second device may scan a received broadcast message to obtain a communication window offset, and synchronize with the communication window of the first device based on the information about the communication window that is obtained in S820.

Optionally, the method may further include S840: The second device sends second information, where the second information is used to request to access the network.

Correspondingly, the first device receives the second information sent by the second device.

The second information may include the identification information of the network and a device ID of the second device, and the second information may be carried in an access request message.

Optionally, the method may further include S850: The first device sends third information, where the third information indicates that the second device has gained access to the network.

Correspondingly, the second device receives the third information sent by the first device.

The third information may be carried in an access response message.

Further, the method may include S860: The first device determines a correspondence between the device ID of the second device and a first timing.

The first device may determine the correspondence between the device ID of the second device and the first timing in the following two manners.

### Manner 1:

The first device receives first information from the second device, where the first information indicates that the second device sends data at an idle timing in the communication window; and the first device determines the correspondence between the device ID of the second device and the first timing. In this case, the first timing may be the idle timing, or may be another timing determined by the first device for the second device.

### Manner 2:

The first device independently determines the correspondence between the device ID of the second device and the first timing. For example, the first device may determine a corresponding timing for the second device based on a sequence in which the second device accesses the network. For another example, the first device may determine a corresponding timing for the second device based on the weight of the second device in the network.

S870: The first device sends the correspondence between the device ID of the second device and the first timing.

Correspondingly, the second device receives the correspondence between the device ID of the second device and the first timing from the first device.

The correspondence between the device ID of the second device and the first timing may indicate the second device to receive a broadcast message at a non-first timing in the communication window of the first device. The first timing may be understood as a chronological order in the communication window. One communication window may be divided into a plurality of timings according to a chronological order. Duration included in one timing may be several milliseconds or several slots. This is not limited in this application. For example, the communication window of the first device may include a timing 1, a timing 2, and a timing 3, each timing may include specific duration, and total duration included in the three timings is less than or equal to the duration of the communication window of the first device. The first timing may be any one of the timing 1, the timing 2, and the timing 3. For example, when the first timing is the timing 2, the non-first timing is the timing 1 and the timing 3, and that the second device receives the broadcast message at the non-first timing in the communication window of the first device is that the second device receives the broadcast message at the timing 1 and the timing 3 in the communication window of the first device.

Optionally, the correspondence between the device ID of the second device and the first timing may further indicate the second device to send a broadcast message at the first timing in the communication window of the first device.

The correspondence and the third information may be carried in a same message or same signaling, or the third information is the correspondence. In other words, S850 and S870 may be simultaneously performed, or S850 and S870 are one step. In this case, that the second device receives the correspondence from the first device indicates that the second device has successfully gained access to the network to which the first device belongs.

Optionally, the first device may further determine effective duration of the correspondence, and send the effective duration to the second device. The effective duration may indicate that the correspondence between the device ID of the second device and the first timing is effective within the effective duration. The effective duration may be one or more periodicities, or one or more milliseconds; or the correspondence remains effective until the correspondence is received next time. This is not limited in this application.

Optionally, the method may further include S880: The second device sends a broadcast message at the first timing in the communication window of the first device.

Correspondingly, another device (including the first device) in the network may receive the broadcast message from the second device at the first timing in the communication window of the first device.

The second device may further receive a broadcast message at a non-first timing in the communication window of the first device.

According to the technical solution of this application, a primary device (for example, the first device) in a network sets a timing at which a secondary device (for example, the second device) sends a broadcast in a communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

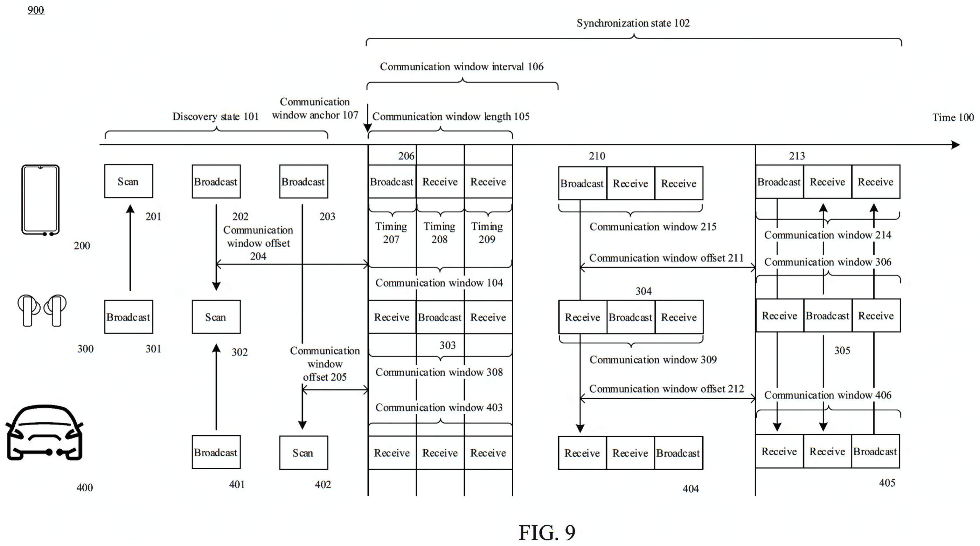

FIG. 9 shows a specific example of a networking communication method according to an embodiment of this application. In this embodiment of this application, a prerequisite for determining, by a first device, a timing for a second device is as follows: The first device and the second device belong to a same network, the first device is a primary device in the network, and the second device is a secondary device in the network. Therefore, the first device and the second device need to first complete a network access process.

As shown in FIG. 9, networking devices may include a mobile phone 200, a headset 300, and a head unit 400. Each networking device has its own weight, and the weight may be carried in a broadcast message. For example, a weight of the mobile phone 200 is the largest, a weight of the head unit 400 is the middle, and a weight of the headset 300 is the smallest. Devices in a same group may perform networking to form a same network. Devices in a network may alternatively be devices with a same mapping relationship, for example, devices with a same account, devices in a same conference room, or devices to which a same authentication digit is transmitted and input in a specific manner. Before devices perform networking, a primary device needs to be first elected. A device with a largest weight becomes a group device, and another device becomes a secondary device. To be specific, the mobile phone 200, the headset 300, and the head unit 400 form a network, the mobile phone 200 is a primary device (a first device), and the headset 300 and the head unit 400 are secondary devices (second devices). The secondary device synchronizes with a communication window of the primary device in terms of an occasion and a channel, to synchronize with the primary device. Optionally, when a weight of a new device that accesses the network is greater than a weight of a current primary device, a device in the current network may synchronize with a communication window of a new primary device, to synchronize with the new primary device.

The specific example of the networking communication method provided in this embodiment of this application may include a discovery state 101 and a synchronization state 102. The discovery state 101 may include steps S810 and S820 shown in FIG. 8, and the synchronization state 102 may include steps S830 to S880 shown in FIG. 8.

Before the discovery state 101 is entered, the mobile phone 200, the headset 300, and the head unit 400 do not discover each other. For example, as shown in FIG. 9, that the mobile phone 200 is discovered by the headset 300 means that a broadcast 202 sent by the mobile phone 200 is received in a scan window 302 of the headset 300, where the broadcast 202 includes fourth information, and the fourth information includes identification information of a network of the mobile phone 200 and a weight of the mobile phone 200 in the network, so that the headset 300 can obtain the fourth information. That is, the mobile phone 200 may perform S810 in FIG. 8 to send the fourth information, and the headset 300 receives the fourth information, so that the mobile phone 200 is discovered by the headset 300.

Optionally, the broadcast 202 sent by the mobile phone 200 may further include information about a communication window of the mobile phone 200. The information about the communication window of the mobile phone 200 indicates a start moment of the communication window and duration of the communication window. For example, as shown in FIG. 9, the information about the communication window 104 of the mobile phone 200 may include a communication window offset 204, and the communication window offset 204 may indicate a time offset from the broadcast 202 to the communication window 104. The headset 300 may record time at which the broadcast 202 is received, and further perform scanning based on the time at which the broadcast 202 is received and the communication window offset 204 carried in the broadcast 202, to obtain a communication window anchor 107. The communication window anchor 107 indicates a start occasion of the communication window 104 of a broadcaster (the mobile phone 200 herein). Each communication window has its own anchor, and different broadcasts may carry different communication window offsets. To be specific, a communication window offset carried in each broadcast may indicate one communication window, and a subsequent communication window occasion and channel may be deduced based on the communication window. In addition, the broadcast 202 may further carry channel information, to indicate an operating channel of the communication window 104. That is, the mobile phone 200 may perform S820 in FIG. 8 to send the information about the communication window of the mobile phone 200, and the headset 300 receives the information about the communication window of the mobile phone 200.

Similarly, a broadcast 401 sent by the head unit 400 may also be received in the scan window 302 of the headset 300, so that the head unit 400 is discovered by the headset 300. The broadcast 401 may include network identification information of the head unit 400 and information about a communication window of the head unit 400. For details, refer to the foregoing descriptions. Details are not described herein again. In this way, the headset 300 completes discovery of the mobile phone 200 and the head unit 400.

Optionally, the mobile phone 200 or the head unit 400 may discover the other two devices in a same manner. In this way, the mobile phone 200, the headset 300, and the head unit 400 can complete mutual discovery between devices. For example, the discovery state 101 may last for a period of time, to ensure, to a maximum extent, that devices within a communication range are fully discovered, and avoid jitter during synchronization with the primary device.

After the discovery state 101 ends, the synchronization state 102 is entered. Each device has discovered surrounding devices, and may compare a largest one of weights of the surrounding devices with a weight of the device. If the device is a device with a largest weight, no access process is performed; otherwise, the device accesses a device with a largest weight. Herein, the mobile phone 200 is a device with a largest weight. Therefore, the headset 300 and the head unit 400 access the network of the mobile phone 200. Before accessing the network of the mobile phone 200, the headset 300 and the head unit 400 may perform step S830 shown in FIG. 8, to be specific, separately synchronize with the mobile phone 200 based on the information about the communication window of the mobile phone 200 that is obtained from the broadcast 202 and a broadcast 203. The information about the communication window of the mobile phone 200 includes but is not limited to communication window offsets 204 and 205, the anchor 107 of the communication window 104, a communication window length 105, a communication window interval 106, and channel information.

An example in which the head unit 400 accesses the network of the mobile phone 200 is used for description. In this case, the mobile phone 200 may be the first device shown in FIG. 8, the head unit 400 may be the second device shown in FIG. 8, and the headset 300 has gained access to the network of the mobile phone 200 before the head unit 400 accesses the network of the mobile phone 200. During first access, the head unit 400 may first receive a broadcast in at least one communication window, for example, a communication window 403, without sending any data, to obtain a current idle communication timing. As shown in FIG. 9, because a synchronization process has been completed between the communication window 403 of the head unit 400 and the communication window 104 of the mobile phone 200, both the communication window 403 of the head unit 400 and the communication window 104 of the mobile phone 200 are divided into a timing 207, a timing 208, and a timing 209 in terms of timings, and each timing may include a short length of duration in the communication window. The primary device, namely, the mobile phone 200, sends a broadcast 206 in the communication window 104 of the mobile phone 200 at the timing 207, and the headset 300 that has gained access to the network is arranged to send a broadcast 303 in a communication window 308 of the headset 300 at the timing 208. Because the headset 300 has gained access to the network, the communication window 308 and the communication window 104 have a same timing configuration. The timing 209 may be an idle timing, and the idle timing is a timing that is not allocated to any device for use.

Communication duration of a timing is variable, and is at least one slot or several milliseconds. When a timing for communication of a current device arrives, the device may send a variable-length broadcast frame, or send a plurality of broadcast frames until a broadcast frame carries a reverse-order field indicating a specific order of the broadcast frame from the last. When the reverse-order field is 0, the communication at the current timing ends. Optionally, a more data (more data, MD) field may alternatively be used. When the MD is 1, the current timing does not end, and there is still a broadcast frame to be sent. When the MD is 0, the communication at the current timing ends, and a next timing arrives. This mechanism enables each device to send data with different lengths to another device in the network.

After the communication window 403 elapses, the head unit 400 may determine, based on a correspondence between a timing and a device identity that is received from the mobile phone 200 and by monitoring a carrier of the timing 209, that the timing 209 is in an idle state, to be specific, may send a broadcast 404 at a timing 209 in a next communication window. The broadcast 404 may include second information. The second information indicates that the head unit 400 requests to access the network of the mobile phone 200. The second information may specifically include the identification information of the network of the mobile phone 200 and a device ID of the head unit 400. That is, the head unit 400 performs step S840 shown in FIG. 8 to send the second information to the mobile phone 200, where the second information is used to request to access the network of the mobile phone 200.

Optionally, the broadcast 404 may further include first information, where the first information indicates that the head unit 400 sends data to the mobile phone 200 at the timing 209 in the idle state.

In a possible implementation, after receiving the broadcast 404 from the head unit 400, the mobile phone 200 may perform step S850 shown in FIG. 8, to be specific, send third information to the head unit 400, to indicate that the head unit 400 has successfully gained access to the network of the mobile phone 200.

In another possible implementation, after receiving the broadcast 404 from the head unit 400, the mobile phone 200 may skip step S850 shown in FIG. 8, and directly perform step S860 to determine a correspondence between a first timing and the device ID of the head unit 400. For example, the mobile phone 200 may re-determine a correspondence between a timing and a device identity to obtain an updated correspondence. The updated correspondence includes the correspondence between the first timing and the device ID of the head unit 400. The first timing may be the timing 209 that is in the idle state and that is previously used by the head unit 400, or may be another possible timing. After determining the correspondence between the first timing and the device ID of the head unit 400, the mobile phone 200 may send a broadcast 210 in a communication window 215, where the broadcast 210 includes the correspondence between the first timing and the device ID of the head unit 400. That is, the mobile phone 200 performs step S870 shown in FIG. 8. The head unit 400 further determines, based on the correspondence between the first timing and the device ID of the head unit 400, that a timing of the head unit 400 is synchronized with the primary device, and only receives a broadcast message from another device (for example, the mobile phone 200 and the headset 300) in the network at a non-first timing based on the correspondence, but does not send a broadcast message. Optionally, the head unit 400 may further send a broadcast message to another device (for example, the mobile phone 200 and the headset 300) in the network at the first timing based on the correspondence. That is, the head unit 400 performs step S880 shown in FIG. 8.

The mobile phone 200, as a primary device in the network, may change the correspondence between a timing and a device ID for a plurality of times based on an actual case. For example, after a device in the network exits the network, the mobile phone 200 may re-update the correspondence between a timing and a device ID. After receiving a corresponding re-updated correspondence between a timing and a device ID, the head unit 400, as a secondary device in the network, changes a corresponding timing based on the correspondence.

In this embodiment of this application, an end moment of a communication window is usually later than an end moment of the last non-idle timing, to reserve an idle timing for a new device to join the network. After the new device joins the network, the communication window may be extended to reserve at least one idle timing again. Due to an offset of a clock under various factors, the clock needs to be periodically synchronized with the primary device (for example, the mobile phone 200). For example, after receiving the broadcast 210, the headset 300 and the head unit 400 may respectively calculate communication offsets 211 and 212. Noise may be removed from the offsets by using a filter algorithm or the like, and then processed offsets are compared with an actually received communication window anchor (calculated based on an occasion at which a broadcast is received from the primary device), to obtain a difference for correcting a synchronization error. Finally, the mobile phone 200, the headset 300, and the head unit 400 communicate with each other in a network including a communication window 214, a communication window 306, and a communication window 406. A broadcast 213 sent by the mobile phone 200 may be received by the headset 300 in the communication window 306 of the headset 300, and received by the head unit 400 in the communication window 406 of the head unit 400. A broadcast 305 sent by the headset 300 may be received by the mobile phone 200 in the communication window 214 of the mobile phone 200, and received by the head unit 400 in the communication window 406 of the head unit 400. A broadcast 405 sent by the head unit 400 may be received in the communication window 214 of the mobile phone 200 and the communication window 406 of the head unit 400. In this way, a broadcast of each device can be received by other devices in the network, to form a bus communication mechanism.

According to the technical solution of this application, a primary device in a network sets a timing at which a secondary device sends a broadcast in a communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

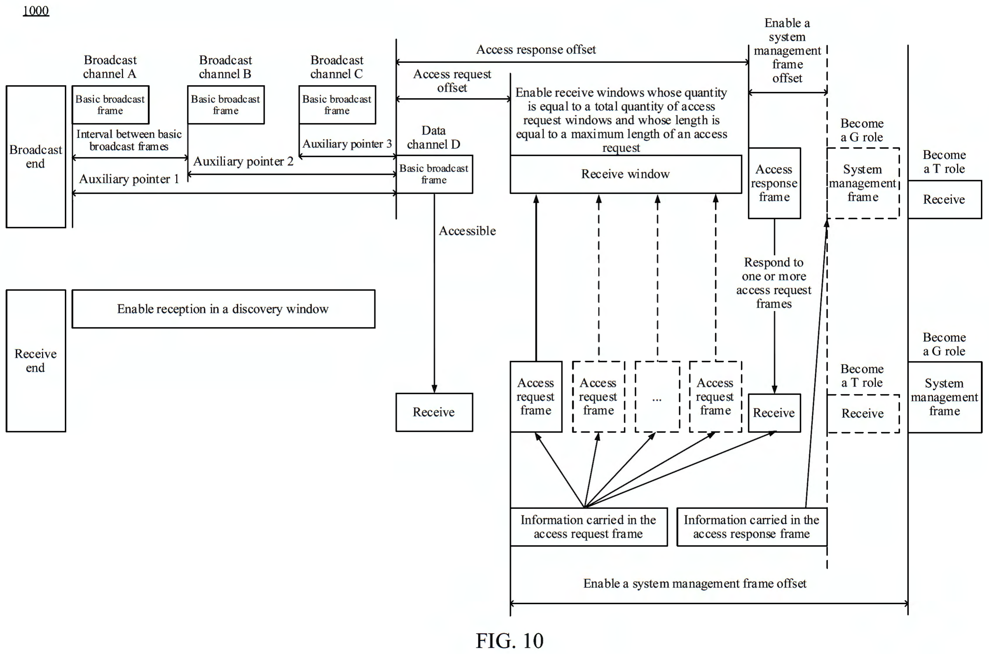

FIG. 10 is a schematic flowchart of a sparklink access method according to an embodiment of this application. A broadcast end corresponds to a first device (a primary device), and a receive end corresponds to a second device (a secondary device). A specific process of sparklink access may be as follows:
(1) The broadcast end sends an accessible extended broadcast frame, where the accessible extended broadcast frame carries resource configuration information for configuring a request node, request information, a request resource, a response resource, and role information of a management (grant, G) node (node) and a managed (terminal, T) node.
(2) If the receive end receives the accessible extended broadcast frame, the receive end sends one or more access request frames in one or more of access request windows configured by using the extended broadcast frame, where the access request frame carries access request information. If a GT role flag field in the access request information indicates that an access initiation end expects to become a G node, the access request frame may carry basic access information or corresponding transmission indication information. If the access initiation end expects to configure a system management frame, the access request frame may carry the basic access information; or if the access initiation end expects not to configure a system management frame, the access request frame may carry the corresponding transmission indication information.
(3) The broadcast end enables, for reception, receive windows whose quantity is equal to a total quantity of access request windows and whose length is equal to a maximum length of an access request, and if the access request frame is received in one of the request windows, returns an access response frame in a corresponding response window, where the access response frame carries access response information. If the GT role flag field in the access request information carried in the access request frame indicates that an access device expects to become a T node and a request response type field in the request response information indicates that a request is accepted, the access response frame further carries basic access information or corresponding transmission indication information. Specifically, if the broadcast end configures a system management frame, the access response frame further carries the basic access information; or if the broadcast end does not configure a system management frame, the access response frame further carries the corresponding transmission indication information.
(4) The receive end receives the access response frame in a corresponding time window. If a connection initiation device receives the access response frame in the corresponding time window and the access response type field in the access response information carried in the access response frame indicates that the request is accepted, the connection initiation device becomes a G role or a T role based on the indication of the GT role flag field in the access request information carried in the previously sent access request frame. If the access initiation end becomes the G role, the access initiation end sends a system management frame based on an indication of the basic access information carried in the access request frame; or starts to transmit data on an asynchronous data link based on an asynchronous data link configuration indicated by the transmission indication information carried in the access request frame. If the access initiation end becomes the T role, the access initiation end receives a system management frame based on an indication of the basic access information carried in the access response frame; or starts to transmit data on an asynchronous data link based on an asynchronous data link configuration indicated by the transmission indication information carried in the access response frame.
(5) Establishment of a G/T asynchronous data link indicates that the access initiation end has gained access to the broadcast end. Depending on whether a system management frame is configured, the first scheduling point of the asynchronous link is determined based on an offset allocated by a system management frame or a configuration in transmission indication information.

In the foregoing sparklink access method, the receive end and the broadcast end form a network. For example, the broadcast end becomes a primary device in the network, and the receive end becomes a secondary device in the network.

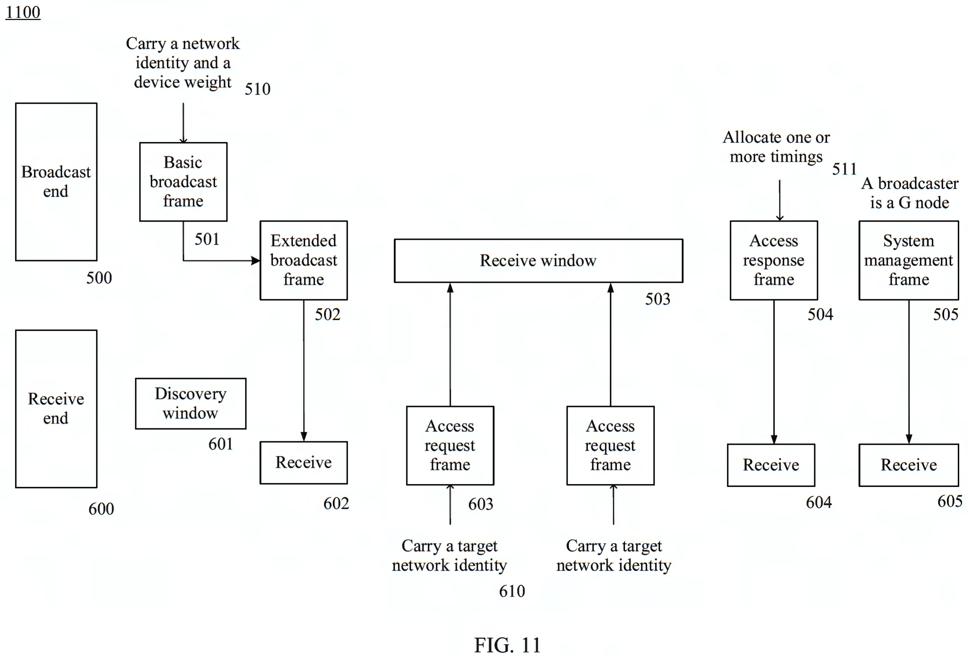

FIG. 11 is a schematic flowchart of a bus access method according to an embodiment of this application. As shown in FIG. 11, a broadcast end 500 corresponds to a first device (a primary device), and a receive end 600 corresponds to a second device (a secondary device). The broadcast end 500 may add fourth information to a basic broadcast frame 501, where the fourth information includes an identity ID of a network and a weight 510. After receiving the basic broadcast frame 501 in a discovery window 601 and parsing out the basic broadcast frame 501, the access end 600 may choose to access the network. The access end 600 needs to obtain information about a receive window 503 from an extended broadcast frame 502, where the information about the receive window 503 indicates a start moment of the receive window 503 and duration of the receive window 503. The access end 600 synchronizes with the broadcast end based on the information about the receive window 503. The access end 600 sends an access request frame 603, where the access request frame 603 carries second information, and the second information includes an identity 610 of a target network that the receive end 600 wants to access.

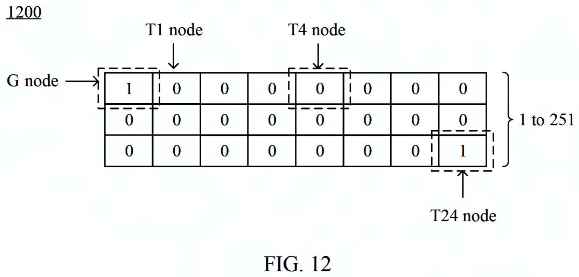

After receiving the access request frame 603, the broadcast end 500 may process the carried request network identity 610. If accepting the request, the broadcast end 500 sends an access response frame 504 and allocates an AID 511, where the AID identifies a timing number corresponding to a device ID of the access end 600, for example, the timing 207, the timing 208, and the timing 209 in FIG. 9. The access response frame 504 includes third information indicating that the receive end 600 has gained access to the network 610. For example, FIG. 12 shows a bitmap form of an AID according to an embodiment of this application. Each bit represents a node. In the bitmap, the 1^{st} bit indicates a primary device (a G node), and another position indicates a secondary device (a T node). It should be understood that a 24-bit indication shown in FIG. 12 is merely an example, and may be flexibly changed based on different application scenarios. This is not limited in this application. When a source address is indicated, only 1 bit is 1. When a destination address is indicated, a plurality of bits may be 1.

Optionally, after allocating a corresponding timing number to the access end 600, the broadcast end 500 may further send a system management frame 505, where the system management frame 505 includes corresponding transmission indication information. The access end 600 receives the system management frame 505, and transmits data based on the corresponding transmission indication information.

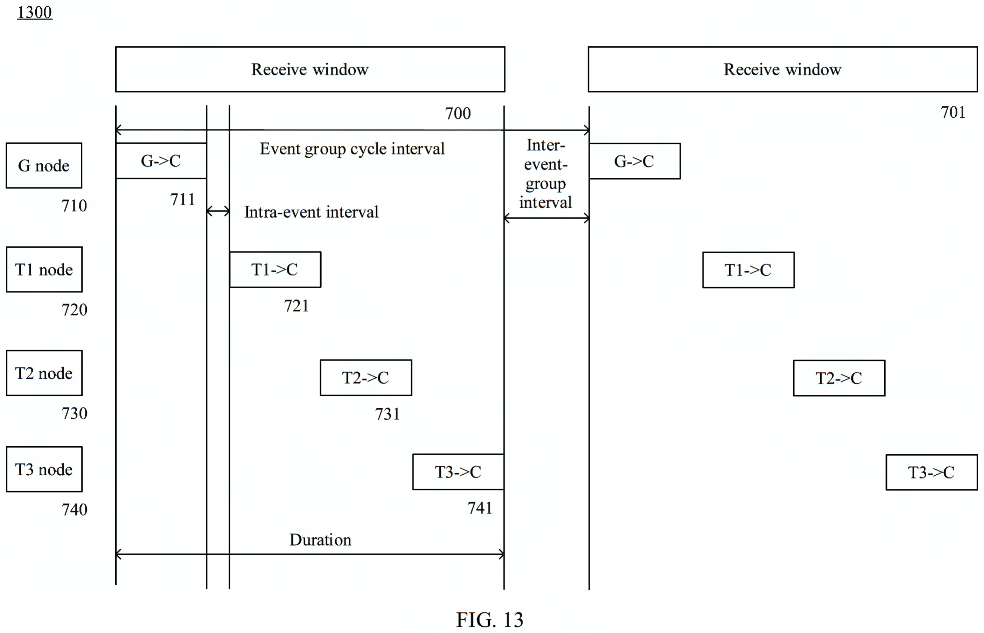

In the foregoing bus access method, the receive end 500 and the broadcast end 600 complete a network access process, the broadcast end 500 becomes a primary device in the network, and the receive end 600 becomes a secondary device in the network. After the network access process is completed, a network synchronization process is performed. As shown in FIG. 13, 710 indicates a G node (a primary device), and 720, 730, and 740 indicate T nodes (secondary devices). Based on allocation of the access response frame 504 in the access process shown in FIG. 11, the 1^{st} bit in FIG. 12 is used by the primary device, the 2^{nd} bit is allocated to T1, and further, the 5^{th} bit is allocated to T4 in sequence. A communication window 700 and a communication window 701 are two example communication windows. In addition to sending a broadcast at its own timing occasion, each device needs to enter a reception state within other communication window time to receive a broadcast from another device in the network (Cluster). 710 indicates the G node, which sends a broadcast 711 (sent by G to the cluster) to another device in the network at the 1^{st} timing. 720 indicates the T1 node, which sends a broadcast 721 (sent by T1 to the cluster) to another device in the network at the 2^{nd} timing. Similarly, 710 and 740 send a broadcast 731 and a broadcast 741 to another device in the network at the 3^{rd} timing and the 4^{th} timing respectively.

According to the technical solution of this application, a primary device in a network sets a timing at which a secondary device sends a broadcast in a communication window, to enable the secondary device to send a broadcast message at a corresponding timing and receive a broadcast message at another timing. This can avoid frequent topology changes and reduce resource overheads when a quantity of networking devices is large and continuously changes with a mobile scenario.

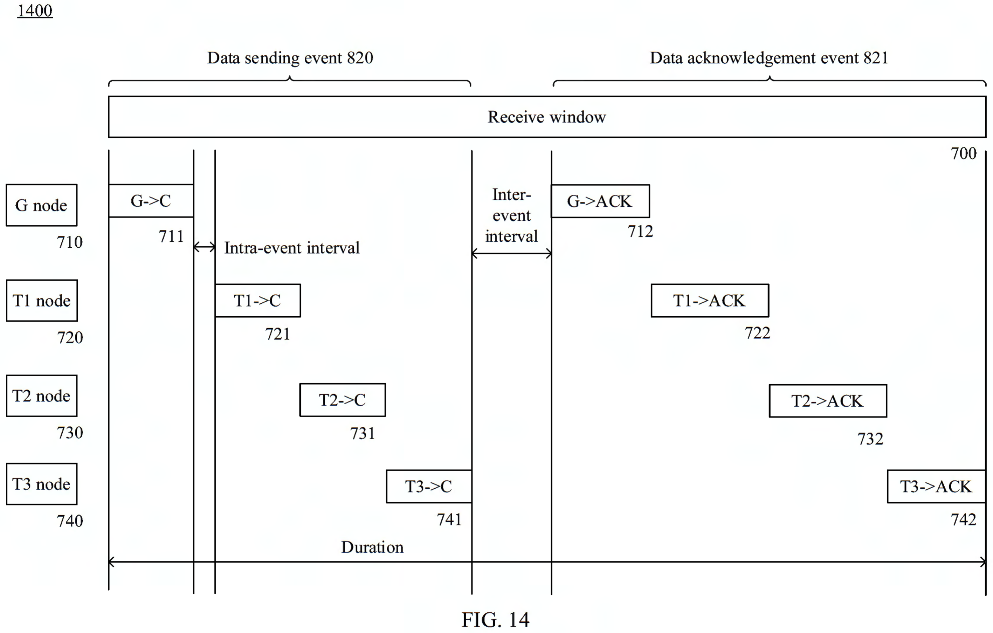

In embodiments of this application, a receive window may include two types of events, for example, a data sending event 820 and a data acknowledgement event 821 shown in FIG. 14. As shown in FIG. 13, the data sending event 820 may specifically include: The G node 710 sends the broadcast 711 to the network, the T1 node 720 sends the broadcast 721 to the network, the T2 node 730 sends the broadcast 731 to the network, and the T3 node 740 sends the broadcast 741 to the network. The data acknowledgement event 821 is used to feed back, to another node in the network, a status of whether the data sending event is successfully received, and specifically includes: The G node 710 sends acknowledgement information 712, to indicate a flag, for example, an acknowledge character (acknowledge character, ACK), that indicates whether the broadcast 721, the broadcast 731, and the broadcast 741 are received by the G node 710. The T1 node 720 sends acknowledgement information 722, to indicate a flag indicating whether the broadcast 711 and the broadcasts 731 and 741 are received by the T1 node 720. Correspondingly, the T2 node 730 and the T3 node 740 send acknowledgement information 732 and acknowledgement information 742 respectively. If 712 indicates that the broadcast 721 is not successfully received or the T1 node does not successfully receive the broadcast 712, the T1 node may resend data content of the broadcast 721 in a next event group. In this way, a device in the network may feed back, in a timely manner after another device completes sending data, whether the data is successfully received. This helps improve reliability of information transmission.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

An embodiment of this application further provides a computer-readable storage medium. The computer-readable storage medium stores computer instructions for implementing a method performed by a discovery device or a broadcast device in the foregoing method embodiments.

For example, when the computer program is executed by a computer, the computer is enabled to implement the method performed by the discovery device or the broadcast device in the foregoing method embodiments.

An embodiment of this application further provides a computer program product, including instructions. When the instructions are executed by a computer, the method performed by the discovery device or the broadcast device in the foregoing method embodiments is implemented.

For descriptions and beneficial effects of related content of any one of the apparatuses provided above, refer to a corresponding method embodiment provided above. Details are not described herein again.

In embodiments provided in this application, it should be understood that the disclosed systems, apparatuses, and methods may be implemented in other manners. The described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A networking device communication method, comprising:
determining, by a first device, a correspondence between a device identity ID of a second device and a first timing, wherein the first device and the second device belong to a same network, the first device is a primary device in the network, and the second device is a secondary device in the network; and
sending, by the first device, the correspondence between the device ID of the second device and the first timing to the second device, wherein the correspondence between the device ID of the second device and the first timing indicates the second device to receive a broadcast message at a non-first timing in a communication window of the first device.

2. The method according to claim 1, wherein the correspondence between the device ID of the second device and the first timing further indicates the second device to send a broadcast message at the first timing in the communication window of the first device.

3. The method according to claim 1 or 2, wherein determining, by the first device, the correspondence between the device ID of the second device and the first timing comprises:
receiving, by the first device, first information from the second device, wherein the first information indicates that the second device sends data at an idle timing in the communication window of the first device; and
determining, by the first device, the correspondence between the device ID of the second device and the first timing, wherein the first timing is the idle timing.

4. The method according to any one of claims 1 to 3, wherein the method further comprises:
receiving, by the first device, second information from the second device, wherein the second information indicates that the second device requests to access the network; and
sending, by the first device, third information to the second device, wherein the third information indicates that the second device has gained access to the network.

5. The method according to claim 4, wherein the method further comprises:
sending, by the first device, fourth information to the second device, wherein the fourth information comprises identification information of the network and a weight of the first device in the network, and the identification information of the network and the weight of the first device in the network are used for the second device to determine whether to request to access the network, wherein
the identification information of the network comprises at least one of the following: a universally unique identifier UUID, an identity ID, a user name, a user number, a user serial number, a locally stored identifier, or a preconfigured identifier.

6. The method according to any one of claims 1 to 5, wherein the method further comprises:
sending, by the first device, information about the communication window of the first device to the second device, wherein the information about the communication window indicates a start moment of the communication window and duration of the communication window.

7. A networking device communication method, comprising:
receiving, by a second device, a correspondence between a device identity ID of the second device and a first timing from a first device, wherein the first device and the second device belong to a same network, the first device is a primary device in the network, and the second device is a secondary device in the network; and
receiving, by the second device, a broadcast message at a non-first timing in a communication window of the first device based on the correspondence between the device ID of the second device and the first timing.

8. The method according to claim 7, wherein the method further comprises:
sending, by the second device, a broadcast message at the first timing in the communication window of the first device based on the correspondence between the device ID of the second device and the first timing.

9. The method according to claim 7 or 8, wherein the method further comprises:
sending, by the second device, data at an idle timing in the communication window of the first device, wherein the idle timing is used for the first device to determine the first timing.

10. The method according to any one of claims 7 to 9, wherein the method further comprises:
sending, by the second device, second information to the second device, wherein the second information is used to request to access the network; and
receiving, by the second device, third information from the first device, wherein the third information indicates that the second device has gained access to the network.

11. The method according to claim 10, wherein the method further comprises:
receiving, by the second device, fourth information from the first device, wherein the fourth information comprises identification information of the network and a weight of the first device in the network, and the identification information of the network comprises at least one of the following: a universally unique identifier UUID, an identity ID, a user name, a user number, a user serial number, a locally stored identifier, and a preconfigured identifier; and
determining, by the second device based on the identification information of the network and the weight of the first device in the network, to request to access the network.

12. The method according to claim 11, wherein determining, by the second device based on the identification information of the network and the weight of the first device in the network, to request to access the network comprises:
determining, by the second device, that the identification information of the network matches identification information of a network of the second device and the weight of the first device in the network is greater than a weight of the second device in the network; and
determining, by the second device, to request to access the network.

13. The method according to any one of claims 7 to 12, wherein the method further comprises:
receiving, by the second device, information about the communication window of the first device, wherein the information about the communication window indicates a start moment of the communication window and duration of the communication window; and
synchronizing, by the second device, with the first device based on the information about the communication window.

14. A communication system, comprising a first device and a second device, wherein the first device and the second device belong to a same network, the first device is a primary device in the network, and the second device is a secondary device in the network, wherein
the first device is configured to send a correspondence between a device ID of the second device and a first timing to the second device; and
the second device is configured to receive a broadcast message at a non-first timing in a communication window of the first device based on the correspondence between the device ID of the second device and the first timing.

15. The system according to claim 14, wherein
the second device is further configured to send a broadcast message at the first timing in the communication window of the first device based on the correspondence between the device ID of the second device and the first timing.

16. The system according to claim 14 or 15, wherein
the second device is further configured to send data at an idle timing in the communication window of the first device; and
the first device is specifically configured to determine the first timing based on the idle timing.

17. The system according to any one of claims 14 to 16, wherein
the second device is further configured to send second information to the first device, wherein the second information is used to request to access the network; and
the first device is further configured to send third information to the second device, wherein the third information indicates that the second device has gained access to the network.

18. The system according to any one of claims 14 to 17, wherein
the first device is further configured to send fourth information to the second device, wherein the fourth information comprises identification information of the network and a weight of the first device in the network, wherein
the identification information of the network comprises at least one of the following: a universally unique identifier UUID, an identity ID, a user name, a user number, a user serial number, a locally stored identifier, and a preconfigured identifier; and
the second device is further configured to: determine that the identification information of the network matches identification information of a network of the second device and the weight of the first device in the network is greater than a weight of the second device in the network; and determine to request to access the network.

19. The system according to any one of claims 14 to 18, wherein
the first device is further configured to send information about the communication window of the first device to the second device, wherein the information about the communication window indicates a start moment of the communication window and duration of the communication window; and
the second device is further configured to synchronize with the first device based on the information about the communication window.

20. An electronic device, wherein the communication apparatus comprises a processor and a memory, the memory is configured to store a computer program, and the processor is configured to **run** the computer program, to enable the electronic device to perform the method according to any one of claims 1 to 6, or enable the electronic device to perform the method according to any one of claims 7 to 13.

21. A computer-readable storage medium, wherein the computer-readable storage medium comprises a computer program or instructions, and when the computer program or instructions are **run** on a computer, the method according to any one of claims 1 to 6 is performed, or the method according to any one of claims 7 to 13 is performed.

22. A chip system, comprising a processor, configured to invoke a computer program or instructions from a memory, and run the computer program or instructions, to enable a communication apparatus in which the chip system is installed to implement the method according to any one of claims 1 to 6, or enable a communication apparatus in which the chip system is installed to implement the method according to any one of claims 7 to 13.
